# EUROPEAN PATENT APPLICATION

(11) **EP 3 618 349 A1**
(43) Date of publication of application: **04.03.2020**
(21) Application number: 18792067.3
(22) Date of filing: 02.02.2018
(51) Int. Cl.: H04L 12/18

(54) **CONFERENCE CASCADING METHOD BASED ON SOFTWARE MEDIA SERVER, AND SERVER AND STORAGE MEDIUM**

(30) Priority: 24.04.2017 CN 201710272003
(71) Applicant: ZTE Corporation, Shenzhen, Guangdong 518057 (CN)
(72) Inventor: ZHOU, Mingyu, Shenzhen Guangdong 518057 (CN); ZHU, Jingsheng, Shenzhen Guangdong 518057 (CN); ZHAO, Zhidong, Shenzhen Guangdong 518057 (CN)
(74) Representative: Petraz, Gilberto Luigi
(86) International application number: PCT/CN2018/075026
(87) International publication number: WO 2018/196464

(57) **Abstract**

Disclosed is a conference cascading method based on a software media server. The method includes: receiving a conference request message sent by a conference terminal; forwarding the conference request message to a multimedia resource function processor MRFP, so as to control the MRFP to perform an operation of creating and joining a conference according to the conference request message; and controlling, after the operation of creating and joining the conference and when it is detected that the conference is created on multiple MRFPs, the multiple MRFPs to cascade with each other so as to form a media channel.

## Description

### Field of the Invention

The present disclosure relates to, but is not limited to, the field of communication technologies, and in particular, to a conference cascading method based on a software media server, a server, and a storage medium.

### Background of the Invention

Traditional media servers use dedicated hardware resources, which can provide great video and audio processing capabilities, but equipment thereof is relatively expensive. With the development of cloud computing technology, media resources are required to be flexible, scalable, virtualized, and highly reliable. Traditional dedicated hardware resources can therefore no longer meet the requirement of development of cloud computing technology. It is thus desirable to provide a pure software media server, which can be easily deployed and can run on a common blade server or a virtual machine.

In the field of video and audio conferencing, multiple video and audio media resources joining a conference can be processed by a single software media server.

### Summary of the Invention

The following is a summary of subject matters detailed in this text. This summary is not intended to limit the protection scope of the claims.

To process a plurality of video and audio media resources using a single software media server may cause the following issues. 1. The MRFCs (Multimedia Resource Function Controller) and MRFPs (Multimedia Resource Function Processor) in the software server are pre-configured in quantity and configuration, and cannot be temporarily added or reduced; when the single software media server processes a plurality of video and audio media resources, if the server performance is insufficient, the processing capability will be linearly reduced or even become unavailable, which will prevent conference terminals from being able to properly join a video and audio conference. 2. Different types of media consume performance of a CPU (Central Processing Unit) by different degrees; for example, there are differences in the consumption of CPU performance between video types h264, h265, or resolutions of 1080p and 720p, which leads to the problem that the software media server cannot confirm the true number of video and audio media resources that it can process, which will also prevent the conference terminals from being able to properly join the video and audio conference.

The present disclosure provides a conference cascading method based on a software media server, a server, and a storage medium, which can prevent the problem that a conference terminal cannot properly join an audio and video conference due to insufficient processing capability of a single software media server.

The present disclosure provides a conference cascading method based on a software media server. The method is executed on a multimedia resource function controller MRFC side. The method includes steps of: receiving a conference request message sent by a conference terminal; forwarding the conference request message to a multimedia resource function processor MRFP, so as to control the MRFP to perform an operation of creating and joining a conference according to the conference request message; and controlling, after the operation of creating and joining the conference and when it is detected that the conference is created on multiple MRFPs, the multiple MRFPs to cascade with each other so as to form a media channel.

In an exemplary embodiment, the step of controlling, when it is detected that the conference is created on multiple MRFPs, the multiple MRFPs to cascade with each other, includes: detecting, after controlling a first MRFP to create the conference, whether the conference created on the first MRFP has been created on a second MRFP connected to a local MRFC; controlling the second MRFP to create a primary conference cascading interface and controlling the first MRFP to create a secondary conference cascading interface, when the conference has been created on the second MRFP; and sending information of the primary conference cascading interface to the first MRFP, and sending information of the secondary conference cascading interface to the second MRFP, so that the first MRFP and the second MRFP are cascaded with each other.

In an exemplary embodiment, before the step of receiving a conference request message sent by a conference terminal, the method further includes: receiving an interregional cascading message carrying a service registration name broadcast by a service server; cancelling registration of a local MRFC at a service registration center, and using the service registration name to re-register at the service registration center; and querying, after the registration succeeds, the service registration center for other MRFCs having a same service registration name as the local MRFC, and establishing signaling channels between the local MRFC and said other MRFCs.

In an exemplary embodiment, before the step of controlling the multiple MRFPs to cascade with each other, the method further includes: detecting, after controlling a first MRFP connected to a local MRFC to create the conference, whether the conference created on the first MRFP has already been created on a second MRFP connected to other MRFCs; using a service registration name of said other MRFCs to re-register at a service registration center when the conference has already been created on the second MRFP connected to said other MRFCs; and establishing signaling channels between the local MRFC and said other MRFCs after the registration succeeds.

In an exemplary embodiment, the step of controlling, when it is detected that the conference is created on multiple MRFPs, the multiple MRFPs to cascade with each other, includes: controlling a first MRFP connected to a local MRFC to create a secondary conference cascading interface and requesting a second MRFP connected to said other MRFCs to create a primary conference cascading interface, after signaling channels are established between the local MRFC and said other MRFCs; and sending information of the secondary conference cascading interface to the second MRFP connected to said other MRFCs, and forwarding information of the primary conference cascading interface sent by the second MRFP to the first MRFP, so that the first MRFP and the second MRFP are cascaded with each other.

In an exemplary embodiment, after the step of controlling the multiple MRFPs to cascade with each other, the method further includes: sending a video image synthesis message to all or some of the multiple MRFPs, the video image synthesis message including information of conference terminals corresponding to respective ones of multiple video images to be synthesized.

The present disclosure further provides another conference cascading method based on a software media server. The method is executed on a multimedia resource function processor MRFP side. The method includes steps of: receiving a conference request message forwarded by a multimedia resource function controller MRFC from a conference terminal; performing an operation of creating and joining a conference according to the conference request message; and cascading, under control of the MRFC, with other MRFPs that have created the conference to form a media channel, after the operation of creating and joining the conference and when the MRFC detects that the conference is created on multiple MRFPs.

In an exemplary embodiment, the step of cascading, under control of the MRFC, with other MRFPs that have created the conference, includes: creating a secondary conference cascading interface under the control of the MRFC; sending information of the secondary conference cascading interface to the MRFC; and receiving information of a primary conference cascading interface forwarded by the MRFC from said other MRFPs, and completing the cascading with said other MRFPs.

In an exemplary embodiment, after the step of cascading with other MRFPs that have created the conference, the method further includes: receiving a video image synthesis message sent by the MRFC, the video image synthesis message including information of conference terminals corresponding to respective ones of multiple video images to be synthesized; and synthesizing media code streams generated respectively by the conference terminals into one media code stream according to the information of the conference terminals corresponding to the respective ones of the multiple video images to be synthesized, and transmitting the synthesized media code stream between the cascaded MRFPs through the media channel.

The present disclosure also provides a multimedia resource function controller MRFC. The MRFC includes a processor and a memory. The processor is configured to execute a software media server-based conference cascading program stored in the memory, so as to implement the above conference cascading method based on a software media server executed on an MRFC side.

The present disclosure also provides a storage medium storing thereon one or more programs. The one or more programs are executable by one or more processors, so as to implement the above conference cascading method based on a software media server executed on an MRFC side.

The present disclosure also provides a multimedia resource function processor MRFP. The MRFP includes a processor and a memory. The processor is configured to execute a software media server-based conference cascading program stored in the memory, so as to implement the above conference cascading method based on a software media server executed on an MRFP side.

The present disclosure also provides a storage medium storing thereon one or more programs. The one or more programs are executable by one or more processors, so as to implement the above conference cascading method based on a software media server executed on an MRFP side.

An embodiment of the present disclosure also provides a computer-readable storage medium storing thereon computer-executable instructions. The computer-executable instructions, when executed, implement the above-described conference cascading method based on a software media server.

The present disclosure has the following beneficial effects.

The present disclosure realizes a conference cascading function based on a software media server.

The present disclosure, in the case that the software media server is insufficiently or not capable of processing, can dynamically cascade a device in the software media server or enable the software media server to cascade other software media servers, thereby effectively enhancing the processing capability of the software media server without additional human operations, making the multimedia conferencing system more stable and the proceeding of the multimedia conferencing more reliable.

Other aspects of the present disclosure will be apparent upon reading and understanding the drawings and detailed descriptions.

### Brief Description of the Drawings

Fig. 1 is a structural diagram of a multimedia conferencing system according to a first embodiment of the present disclosure;
Fig. 2 is a schematic diagram of a single-MRFC and multi-MRFP application scenario according to the first embodiment of the present disclosure;
Fig. 3 is a schematic diagram of a multi-MRFC and multi-MRFP application scenario according to the first embodiment of the present disclosure;
Fig. 4 is a flowchart of a conference cascading method based on a software media server according to a second embodiment of the present disclosure;
Fig. 5 is a flowchart of a conference cascading method based on a software media server according to a third embodiment of the present disclosure;
Fig. 6 is a flowchart showing steps of expanding an MRFC according to a fourth embodiment of the present disclosure;
Fig. 7 is a timing diagram of expanding the MRFC according to the fourth embodiment of the present disclosure;
Fig. 8 is a flowchart showing steps of shrinking an MRFC according to a fifth embodiment of the present disclosure;
Fig. 9 is a timing diagram of shrinking the MRFC according to the fifth embodiment of the present disclosure;
Fig. 10 is a flowchart showing steps of expanding an MRFP according to a sixth embodiment of the present disclosure;
Fig. 11 is a timing diagram of expanding the MRFP according to the sixth embodiment of the present disclosure;
Fig. 12 is a flowchart showing steps of shrinking an MRFP according to a seventh embodiment of the present disclosure;
Fig. 13 is a timing diagram of shrinking the MRFP according to the seventh embodiment of the present disclosure;
Fig. 14 is a flowchart showing steps of data updating of an MRFC according to an eighth embodiment of the present disclosure;
Fig. 15 is a timing diagram of a conference cascading method based on a software media server according to a ninth embodiment of the present disclosure;
Fig. 16 is a schematic diagram of a cascaded conference model in a single- MRFC and multi-MRFP mode according to the ninth embodiment of the present disclosure;
Fig. 17 is a timing diagram of interregional cascading of MRFCs according to a tenth embodiment of the present disclosure;
Fig. 18 is a timing diagram of a conference cascading method based on a software media server according to the tenth embodiment of the present disclosure; and
Fig. 19 is a schematic diagram of a cascaded conference model in a multi-MRFC and multi-MRFP mode according to the tenth embodiment of the present disclosure.

### Detailed Description of Preferred Embodiments

Embodiments of the present disclosure will be described below with reference to the accompanying drawings.

### Embodiment 1

The present disclosure provides a multimedia conferencing system for holding a multimedia conference. The multimedia conference is the above-mentioned video and audio conference (hereinafter referred to as a conference).

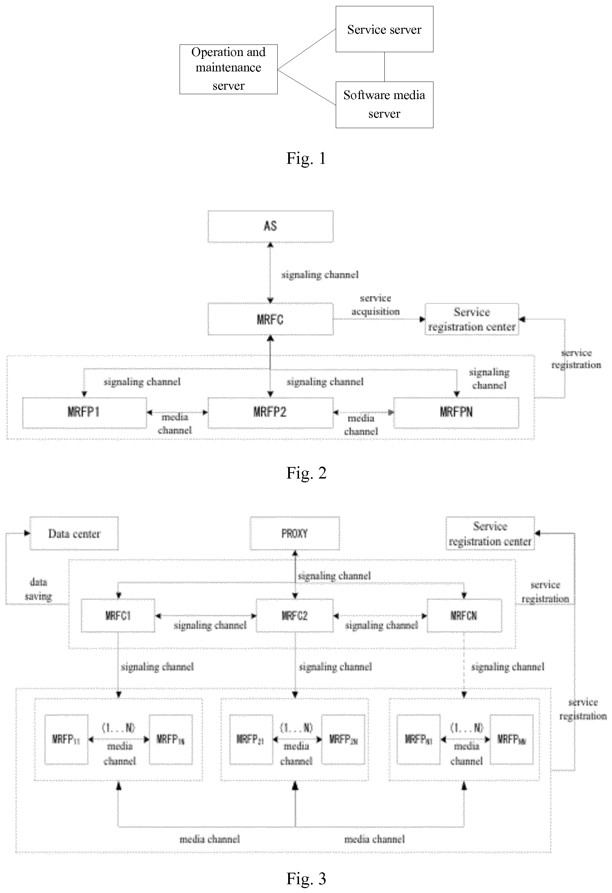

As shown in Fig. 1, it is a structural diagram of a multimedia conferencing system according to a first embodiment of the present disclosure.

The system may include: an operation and maintenance server, a service server, and a software media server. The software media server may include: an MRFC (Multimedia Resource Function Controller), an MRFP (Multimedia Resource Function Processor), and a service registration center. The software media server may also include a data storage server (also known as a data center).

The operation and maintenance server is configured to operate and maintain the service server and the software media server in a conference cascading system. The operation and maintenance server may also be configured to: deploy the MRFC and the MRFP in the software media server, dynamically expand or shrink the MRFC and the MRFP, and provide supports to conference cascading functions of the software media server.

The service server is configured to receive a conference request message (a conference creation request and a conference joining request) from a conference terminal and forward the conference request message to the software media server, and control the software media server to cascade. The service server may be an AS (Application Server) or a PROXY (Proxy Server). The PROXY can be used as a signaling distribution server. The AS is applicable to a single-MRFC and multi-MRFP application scenario, as shown in Fig. 2. The PROXY is applicable to a multi-MRFC and multi-MRFP application scenario, as shown in Fig. 3. These two scenarios will be described later.

The software media server is configured to perform conference creation and conference joining processing according to the conference request message forwarded by the service server, and dynamically cascade the MRFC and dynamically cascade the MRFP as required.

The MRFC is configured to parse the conference request message into an internal message body and forward the internal message body to the MRFP connected therewith. The MRFC may also cascade other MRFCs and control the MRFP to cascade. The interconnected MRFC and MRFP use a same service registration name when registering at the service registration center.

The MRFP is configured to receive and transmit media code streams, deal with coding and decoding, synthesize images, and cascade other MRFPs under the control of the MRFC.

The service registration center is configured to register a device so that the registered device has a function of the MRFC or the MRFP.

The data storage server is configured to store conference data.

The present embodiment can dynamically cascade software media servers deployed in different regions into a unified media server as required, so as to support an interregional conference. When interregional cascading is not needed, a cascading link can be disconnected to thereby restore independently running software media servers in different regions.

The present embodiment can dynamically cascade different MRFCs in a same software media server, and dynamically cascade different MRFPs in a same software media server as required, so as to improve processing capabilities of the software media server and enhance system stability.

### Embodiment 2

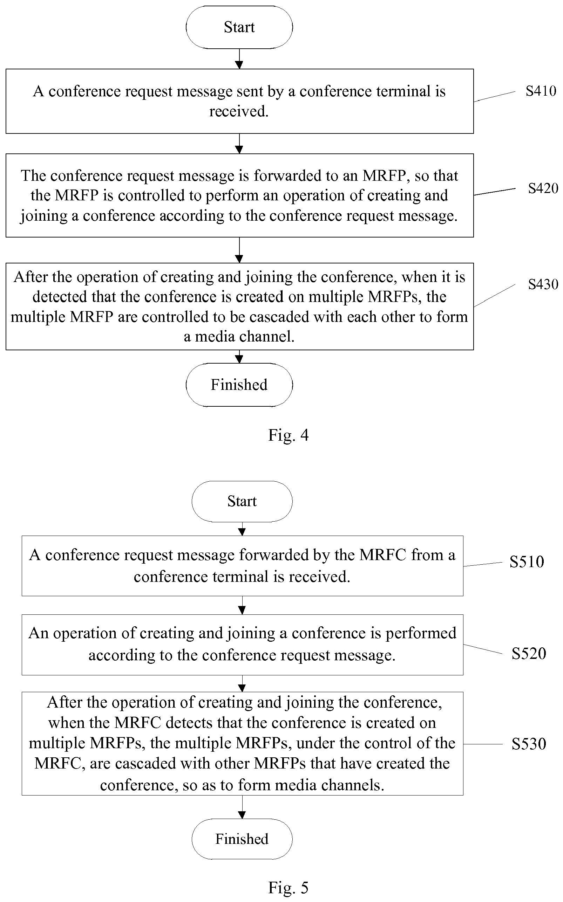

The present embodiment, based on the above-described system, provides a conference cascading method based on a software media server. An executive body of the present embodiment is an MRFC. Fig. 4 is a flowchart of the conference cascading method based on a software media server according to a second embodiment of the present disclosure. Referring to Fig. 4, the method may include the following steps.

In step S410, a conference request message sent by a conference terminal is received.

In step S420, the conference request message is forwarded to an MRFP, so that the MRFP is controlled to perform an operation of creating and joining a conference according to the conference request message.

In step S430, after the operation of creating and joining a conference, when it is detected that the conference is created on multiple MRFPs, the multiple MRFP are controlled to be cascaded to form a media channel.

Conference creation and conference joining refer to creation of a conference and joining the created conference. In particular, on an MRFP on which a conference has not yet been created a conference can be created first, and then joining the conference can be conducted.

The conference request message can be used to request creation or joining of a multimedia conference.

The conference terminal can send the conference request message to the MRFC in a software media server through a service server, and then the MRFC forwards the conference request message to the MRFP to complete the conference creation and joining processing. Optionally, before sending the conference request message, the conference terminal may first send a media negotiation message for media negotiation; the MRFC forwards the media negotiation message from the conference terminal to the MRFP according to a preset load balancing policy, so as to perform media negotiation; and after the media negotiation succeeds, the conference request message from the conference terminal is forwarded to the MRFP, so that the MRFP performs the conference creation and joining processing.

In the present embodiment, the multiple MRFPs on which a same conference is created may be located in a same software media server, or may be located in different software media servers. For example, the multiple MRFPs are located in software media servers in different regions, and an interregional cascading conference has been completed.

In the present embodiment, the following optional application scenarios are provided.

Application scenario 1: In a single-MRFC and multi-MRFP application scenario, multiple MRFPs are controlled to be cascaded, which includes steps of:
detecting, after a first MRFP is controlled to create the conference, whether the conference created on the first MRFP has been created on a second MRFP that is connected to a local MRFC (namely an MRFC as an executive body);
controlling the second MRFP to create a primary conference cascading interface, and controlling the first MRFP to create a secondary conference cascading interface, when the conference has been created on the second MRFP; and
sending information of the primary conference cascading interface to the first MRFP, and sending information of the secondary conference cascading interface to the second MRFP, so that the first MRFP and the second MRFP are cascaded.

Application scenario 2: In a multi-MRFC and multi-MRFP application scenario, multiple MRFPs are controlled to be cascaded, which includes steps of:
controlling the multiple MRFPs to be cascaded when the multiple MRFPs creating a same conference are connected to a same MRFC, referring to the single-MRFC and multi-MRFP application scenario; and
cascading the multiple MRFCs first and then cascading the multiple MRFPs when the multiple MRFPs are connected to different MRFCs.

The step of cascading the multiple MRFCs can be achieved by the following sub-steps of:
detecting, after the first MRFP connected to the local MRFC (i.e., the MRFC as the executive body) is controlled to create the conference, whether the conference created on the first MRFP has been created on the second MRFP connected to other MRFCs,
cancelling, when the conference has been created on the second MRFP connected to others MRFCs, registration of the local MRFC at the service registration center, and using a service registration name of said other MRFCs to re-register at the service registration center;
establishing, after the registration succeeds, a signaling channel between the local MRFC and said other MRFCs to realize cascading of the local MRFC with said other MRFCs.

The step of cascading the multiple MRFCs can also be achieved by the following sub-steps of:
receiving an interregional cascading message carrying a service registration name sent by the service server through broadcast;
cancelling registration of the local MRFC at the service registration center and using the service registration name to re-register at the service registration center; and
querying the service registration center for other MRFCs having the same service registration name as the local MRFC after the registration succeed, and establishing a signaling channel between the local MRFC and said other MRFCs to realize cascading of the local MRFC with other MRFCs.

Optionally, the local MRFC and said other MRFCs may be located in different regions, and in this case the service registration name carried in the regional cascading message may be a registered name of an MRFC located in a different region from the local MRFC at the service registration center.

After the cascading of multiple MRFCs, multiple MRFPs can be dynamically cascaded during the conference creation and conference joining process. Optionally, after the signaling channel is established between the local MRFC and said other MRFCs, the first MRFP connected to the local MRFC is controlled to create a secondary conference cascading interface, and a second MRFP connected to said other MRFCs is requested to create a primary conference cascading interface. Information of the secondary conference cascading interface is sent to the second MRFP connected to said other MRFCs, and information of the primary conference cascading interface sent by the second MRFP is forwarded to the first MRFP, such that the first MRFP and the second MRFP are cascaded.

In the present embodiment, in order to reduce the amount of data in the media channel, after the multiple MRFPs are controlled to be cascaded, the method may further include: sending a video image synthesis message to all or some of the multiple MRFPs. The video image synthesis message includes: information of conference terminals corresponding to respective ones of multiple video images to be synthesized.

The present disclosure, in the case that the software media server is insufficiently or not capable of processing, can dynamically cascade a device in the software media server or enable the software media server to cascade other software media servers, thereby effectively enhancing the processing capability of the software media server without additional human operations, making the multimedia conferencing system more stable and the proceeding of the multimedia conferencing more reliable.

### Embodiment 3

The present embodiment, based on the above system, provides another conference cascading method based on a software media server. An executive body of the present embodiment is an MRFP. Fig. 5 is a flowchart of a conference cascading method based on a software media server according to a third embodiment of the present disclosure. Referring to Fig. 5, the method may include the following steps.

In step S510, a conference request message forwarded by the MRFC from a conference terminal is received.

In step S520, an operation of creating and joining a conference is performed according to the conference request message.

In step S530, after the operation of creating and joining the conference, when the MRFC detects that the conference is created on multiple MRFPs, the multiple MRFPs, under the control of the MRFC, are cascaded with other MRFPs that have created the conference, so as to form media channels.

The step of cascading the multiple MRFPs with said other MRFPs that have created the conference may include: creating a secondary conference cascading interface under the control of the MRFC; sending information of the secondary conference cascading interface to the MRFC; receiving information of a primary conference cascading interface forwarded by the MRFC from said other MRFPs, so as to complete cascading of the multiple MRFPs with other MRFPs.

In the present embodiment, in order to reduce the data amount in the media channels, a video image synthesis message sent by the MRFC may be received after the multiple MRFPs are cascaded with said other MRFPs that have created the conference. The video image synthesis message includes information of conference terminals corresponding to respective ones of multiple video images to be synthesized. Media code streams respectively generated by the plurality of conference terminals are synthesized into one media code stream according to information of the conference terminals corresponding to the respective ones of the multiples video images to be synthesized, and the synthesized media code stream is transmitted between the cascaded MRFPs through the media channels.

In the present embodiment, the MRFPs can dynamically cascade other MRFPs in a same software media server or MRFPs in other software media servers under the control of the MRFC, which can improve system stability and increase reliability of the multiple media conference.

In order to better realize the conference cascading method based on a software media server, the present disclosure can also dynamically expand and shrink the MRFC and MRFP in the software media server. In this way, when the running MRFC and MRFP in the software media server are insufficiently or not capable of processing, there are enough MRFCs and MRFPs in the software media server that can be used and cascaded.

### Embodiment 4

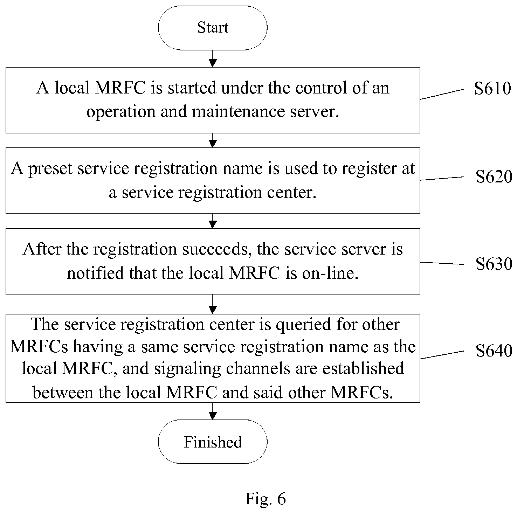

The present embodiment describes the expanding of an MRFC. Fig. 6 is a flowchart showing step of expanding an MRFC according to a fourth embodiment of the present disclosure. The executive body is an MRFC. Referring to Fig. 6, the process may include the following steps.

In step S610, the local MRFC (i.e., the MRFC as the executive body) is started under the control of an operation and maintenance server.

The operation and maintenance server can monitor operation status of each of software media servers in all software media servers in a multimedia conferencing system in real time, and control, when detecting that one or more running MRFCs in a software media server are overloaded, an MRFC that has not been running in the software media server to start.

In step S620, a preset service registration name is used to register at a service registration center.

The service registration name can be set by the user as required or a service registration name of other MRFCs in the same software server can be used for the registration. The service registration name of other MRFCs can be acquired by the operation and maintenance server from the server registration center.

In step S630, after the registration succeeds, the service server is notified that the local MRFC is on-line.

In step S640, the service registration center is queried for other MRFCs having a same service registration name as the local MRFC, and signaling channels are established between the local MRFC and said other MRFCs.

When a device is registered at the service registration center, the service registration center can record information of the device. In the present embodiment, after the MRFC is on-line, the MRFC may query the service registration center for information of said other MRFCs having the same service registration name as the local MRFC, and establish a link with other MRFCs according to said information to form signaling channels.

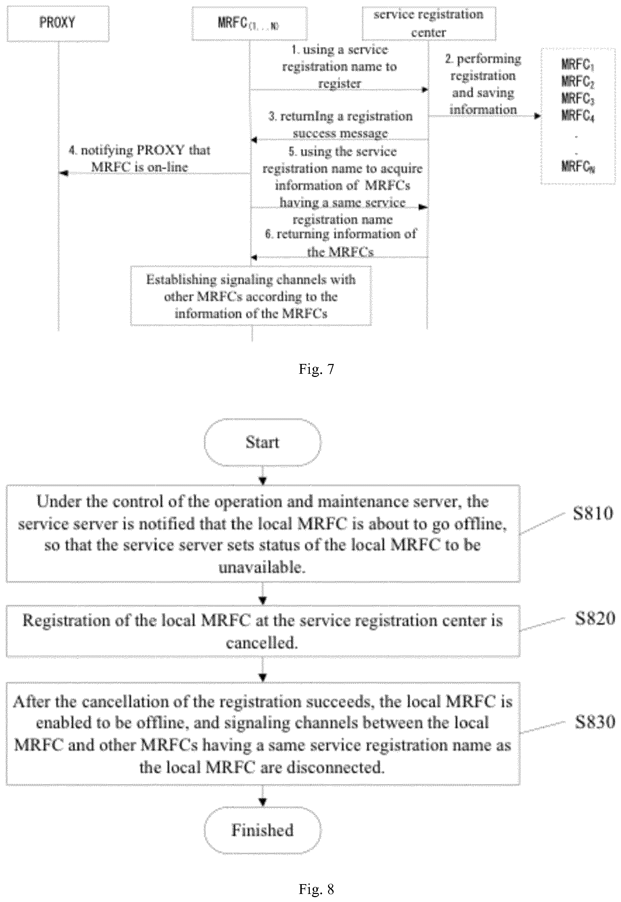

Fig. 7 is a timing diagram of expanding the MRFC according to the fourth embodiment of the present disclosure.

In step 1, MRFC₁ to MRFC_{N} each use a service registration name to register at the service registration center.

MRFCs that are expanded in a same software media server can use a same service registration name.

MRFC₁ to MRFC_{N} can be started respectively under the control of the operation and maintenance server. Since operations of MRFC₁ to MRFC_{N} are the same, MRFC1 to MRFCN are embodied as a whole in Fig. 7.

The operation and maintenance server is not shown in Fig. 7. The operation and maintenance server can expand multiple MRFCs.

In step 2, the service registration center performs registration of MRFC₁ to MRFC_{N} respectively, and saves information of MRFCI to MRFCN respectively.

In step 3, after the registration succeeds, the service registration center returns a registration success message to each of MRFC₁ to MRFC_{N}.

In step 4, after each of MRFC₁ to MRFC_{N} receives the registration success message, the PROXY is notified so that the PROXY knows that MRFC1 to MRFCN have been on-line.

After the PROXY knows that MRFC₁ to MRFC_{N} have been on-line, status of each of MRFC₁ to MRFC_{N} can be set to be available.

In step 5, each of MRFC₁ to MRFC_{N}, according to the service registration name it used at the registration, obtains information of an MRFC having a same service registration name as itself from the service registration center.

For example, MRFC₁ to MRFC_{N} use a same service registration name to register at the service registration center; when MRFC₁ to MRFC_{N} obtain information of an MRFC using said service registration name, MRFC₁ can acquire information of MRFC₂ to MRFC_{N}, and MRFC₂ can acquire information of MRFC₁, and MRFC₃ to MRFC_{N}, and so on, and MRFC_{N} can obtain information of MRFC₁ to MRFC_{N-1}.

In step 6, the service registration center returns information of the MRFCs to MRFC₁ to MRFC_{N}, respectively.

In step 7, MRFC₁ to MRFC_{N} each save respective information of the MRFC returned by the service registration center, and each establish a signaling channel with a corresponding MRFC according to the returned information of the MRFC.

For example, MRFC₁ to MRFC_{N} save the information of the MRFCs returned by the service registration center; MRFC₁ can establish a signaling channel with each of MRFC₂ to MRFC_{N}, MRFC2 can establish a signaling channel with each of MRFC₁, and MRFC₃ to MRFC_{N}, and so on, and MRFC_{N} can establish a signaling channel with each of MRFC₁ to MRFC_{N-1}.

### Embodiment 5

The present embodiment describes shrinking of an MRFC. Fig. 8 is a flowchart showing steps of shrinking an MRFC according to a fifth embodiment of the present disclosure. The executive body is an MRFC. Referring to Fig. 8, the process may include the following steps.

In step S810, under the control of the operation and maintenance server, the service server is notified that the local MRFC is about to go offline, so that the service server sets status of the local MRFC to be unavailable.

In step S820, registration of the local MRFC at the service registration center is cancelled.

In step S830, after the cancellation of the registration succeeds, the local MRFC is enabled to be offline, and signaling channels between the local MRFC and other MRFCs having a same service registration name as the local MRFC are disconnected.

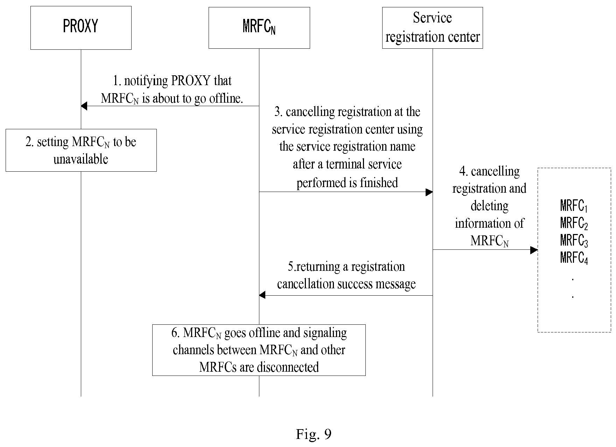

Fig. 9 is a timing diagram of shrinking the MRFC according to the fifth embodiment of the present disclosure. The present embodiment takes MRFC_{N} as an example. Referring to Fig. 9, the shrinking of the MRFC may include the following steps.

In step 1, MRFC_{N} notifies PROXY that MRFC_{N} is about to go offline.

When the MRFC in the software media server is shrunk, the operation and maintenance server can notify the MRFC_{N} that can go offline to be prepared to go offline, and MRFC_{N} notifies the PROXY connected thereto that MRFC_{N} itself is about to go offline.

In step 2, the PROXY sets status of MRFC_{N} to be unavailable after receiving the notification that MRFC_{N} is about to go offline.

After the status of MRFC_{N} is set to be unavailable, a new call service will not be forwarded to MRFC_{N}.

In step 3, after a terminal service performed by the MRFC_{N} is finished, registration at the service registration center is cancelled using the service registration name.

The terminal service can be an audio and video conference service.

In step 4, the service registration center cancels registration of MRFC_{N} and deletes information of MRFC_{N}.

In step 5, the service registration center returns a registration cancellation success message to MRFC_{N}.

In step 6, MRFC_{N} goes offline after receiving the registration cancellation success message, and signaling channels between MRFC_{N} and other MRFCs are disconnected.

After MRFC_{N} goes offline, MRFC₁ to MRFC_{N-1} will not be able to find MRFC_{N} in the registration service center, and signaling channels between MRFC₁ to MRFC_{N-1} and MRFC_{N} are thus disconnected.

### Embodiment 6

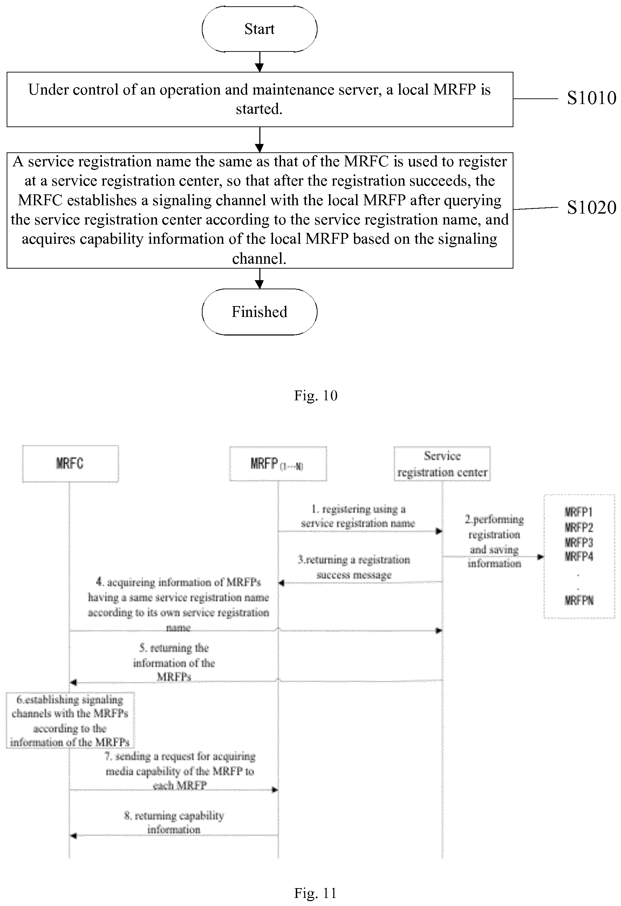

The present embodiment describes expanding of an MRFP. Fig. 10 is a flowchart showing steps of expanding an MRFP according to a sixth embodiment of the present disclosure. The executive body is an MRFP. Referring to Fig. 10, the expanding of the MRFP may include the following steps.

In step S1010, under control of an operation and maintenance server, a local MRFP (i.e., the MRFP as the executive body) is started.

The operation and maintenance server can monitor operation status of each software media server in all software media servers in a multimedia conferencing system in real time, and control, when monitoring one or more running MRFPs in a software media server are overloaded, an MRFP that has not been running in the software media server to start.

In step S1020, a service registration name the same as that of the MRFC is used to register at a service registration center, so that after the registration succeeds, the MRFC establishes a signaling channel with the local MRFP after querying the service registration center according to the service registration name, and acquires capability information of the local MRFP based on the signaling channel.

The service registration name used by the MRFP can be set by the user or set according to a service registration name of the MRFC in the software media server where the MRFP is located. The service registration name of the MRFC can be acquired by the operation and maintenance server from the service registration center.

The MRFP and the MRFC can be registered using a same service registration name. The MRFP can, according to the service registration name, query the service registration center for information of an MRFC having a same service registration name, and establish a link as a signaling channel with the MRFC according to the information of said MRFC.

Fig. 11 is a timing diagram of expanding the MRFP according to the sixth embodiment of the present disclosure.

In step 1, MRFP₁ to MRFP_{N} each use a service registration name to register at the service registration center.

MRFPs that are expanded in a same software media server can use a same service registration name.

MRFP₁ to MRFP_{N} can be started respectively under the control of the operation and maintenance server.

Since operations of MRFP₁ to MRFP_{N} are the same, MRFP₁ to MRFP_{N} are embodied as a whole in Fig. 11.

The operation and maintenance server is not shown in Fig. 11. The operation and maintenance server can expand multiple MRFPs.

In step 2, the service registration center performs registration of MRFP₁ to MRFP_{N} respectively, and saves information of MRFP₁ to MRFP_{N}.

In step 3, after the registration succeeds, the service registration center returns a registration success message to each of MRFP₁ to MRFP_{N}.

In step 4, the MRFC acquires information of MRFPs having a same service registration name as the MRFC itself from the service registration center according to its own service registration name.

In step 5, the service registration center returns the information of the MRFPs having the same service registration name as the MRFC to the MRFC.

In step 6, the MRFC saves the information of the MRFPs returned by the service registration center, and establishes signaling channels respectively with the corresponding MRFPs according to the returned information of the MRFPs.

For example, the service registration names of MRFP₁ to MRFP_{N} are the same as the service registration name of the MRFC, and in this case the service registration center can return information of MRFP₁ to MRFP_{N} to the MRFC, and then the MRFC establishes signaling channels respectively with MRFP₁ to MRFP_{N}.

In step 7, the MRFC, based on the signaling channels, sends a request for acquiring media capability of the MRFP to each MRFP.

In step 8, each MRFP returns its capability information to the MRFC through the signaling channel.

The capability information may include: media type, port number, and the like. The media type is, for example, video h264, h265 or resolution 1080p, 720p.

The MRFC may, according to the capability information of the MRFPs, send a media negotiation message sent by a conference terminal to an appropriate MRFP for media negotiation.

### Embodiment 7

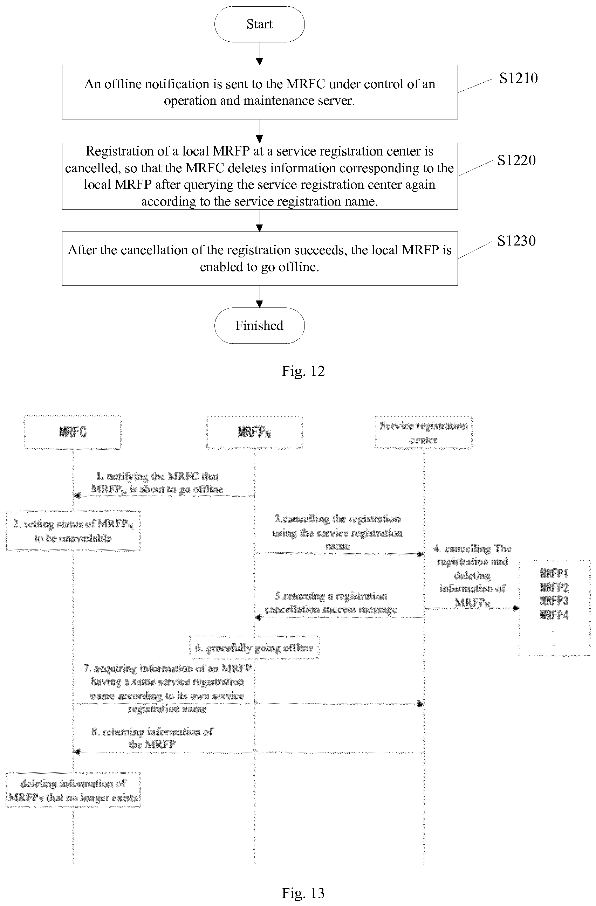

The present embodiment describes shrinking of an MRFP. Fig. 12 is a flowchart showing steps of shrinking an MRFP according to a seventh embodiment of the present disclosure. The executive body is an MRFP. Referring to Fig. 12, the shrinking of the MRFP may include the following steps.

In step S1210, an offline notification is sent to the MRFC under control of an operation and maintenance server.

In step S1220, registration of a local MRFP (i.e., the MRFP as the executive body) at a service registration center is cancelled, so that the MRFC deletes information corresponding to the local MRFP after querying the service registration center again according to the service registration name. After the MRFC deletes the information corresponding to the local MRFP, a signaling channel between the MRFC and the local MRFP is disconnected.

In step S1230, after the cancellation of the registration succeeds, the local MRFP is enabled to go offline.

Fig. 13 is a timing diagram of shrinking the MRFP according to the seventh embodiment of the present disclosure. The present embodiment takes MRFP_{N} as an example. Referring to Fig. 13, the shrinking of the MRFP may include the following steps.

In step 1, MRFP_{N} notifies, through the signaling channel, the MRFC that MRFP_{N} is about to go offline.

During shrinking of the MRFP in the software media server, the operation and maintenance server can notify an MRFP that can go offline to be prepared to go offline. The MRFP receiving the notification notifies an MRFC connected thereto that the MRFP is about to go offline.

In step 2, after receiving the notification that MRFP_{N} is about to go offline, the MRFC sets status of MRFP_{N} to be unavailable.

After the status of the MRFP_{N} is set to be unavailable, a new call service will not be able to be connected to MRFP_{N}.

In step 3, MRFP_{N} cancels its registration at the service registration center using the service registration name.

In step 4, the service registration center cancels the registration of MRFP_{N} and deletes information of MRFP_{N}.

In step 5, the service registration center returns a registration cancellation success message to MRFP_{N}.

In step 6, MRFP_{N} gracefully goes offline after receiving the registration cancellation success message.

Gracefully going offline means that the MRFP (such as MRFP_{N}) goes offline when it has no tasks to perform.

In step 7, the MRFC acquires information of an MRFP having a same service registration name as the MRFC itself from the service registration center according to its own service registration name.

In step 8, the service registration center returns information of the MRFP having the same service registration name as the MRFC to the MRFC.

In step 9, the MRFC, based on the information of the MRFP returned by the service registration center, updates previously acquired information of the MRFP.

The MRFC may compare the newly acquired information of the MRFP with the previously acquired information of the MRFP, delete the information of the MRFP that does not exist this time, add the information of the newly appeared MRFP, establish a signaling channel with the newly appeared MRFP, and acquire capability information of the newly appeared MRFP.

### Embodiment 8

Because an MRFC and an MRFP can be dynamically expanded and shrunk, in order to ensure normal proceeding of a conference cascading method based on a software media server, real-time data of the MRFC should be guaranteed. Data updating process of the MRFC is described below.

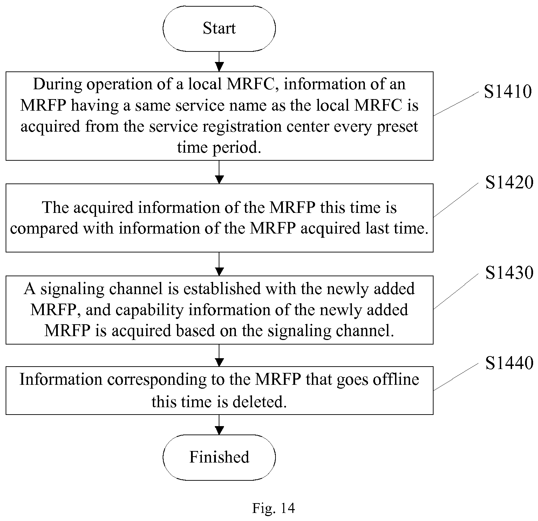

Fig. 14 is a flowchart showing steps of updating data of an MRFC according to an eighth embodiment of the present disclosure. Referring to Fig. 14, the executive body of the process is an MRFC, and the process may include the following steps.

In step S1410, during operation of a local MRFC (i.e., the MRFC as the executive body), information of an MRFP having a same service name as the local MRFC is acquired from the service registration center every preset time period.

In step S1420, the acquired information of the MRFP this time is compared with information of the MRFP acquired last time.

In step S1430, a signaling channel is established with the newly added MRFP, and capability information of the newly added MRFP is acquired based on the signaling channel.

In step S1440, information corresponding to the MRFP that goes offline this time is deleted, and a signaling channel with the MRFP that goes offline this time is disconnected.

During the operation of the local MRFC, when a notification sent by the MRFP indicating that the MRFP is going offline is received, the status of the MRFP may be set to be unavailable.

### Embodiment 9

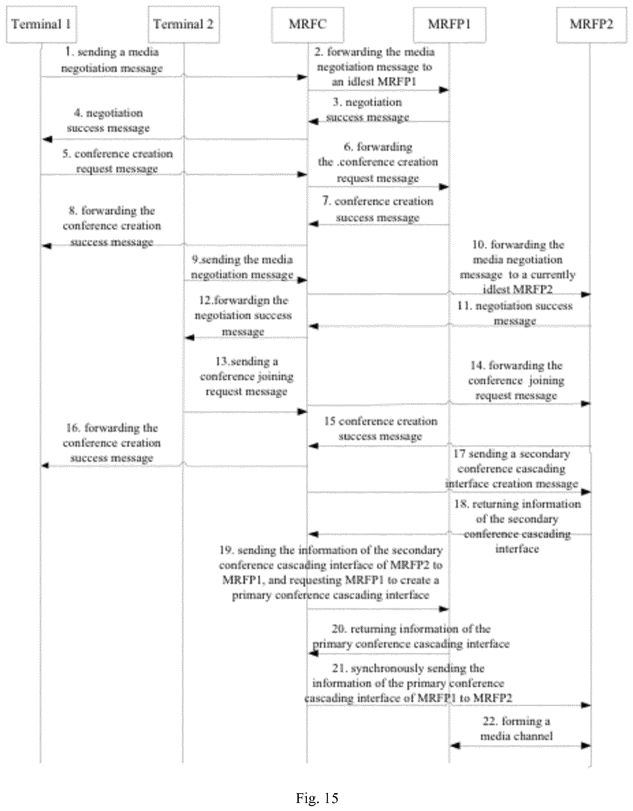

In the present embodiment, a single-MRFC and multi-MRFP application scenario will be described with reference to Fig. 2. As shown in Fig. 15, it is a timing diagram according to a ninth embodiment of the present disclosure.

In the present embodiment, interaction between terminal 1 and the MRFC, and interaction between terminal 2 and the MRFC are carried out through an AS (Application server). In order to make it easier to understand the present embodiment, the AS is temporarily ignored in the description of the timing diagram and the subsequent description.

Referring to Fig. 15, the conference cascading method based on a software media server may include the following steps.

In step 1, terminal 1 sends a media negotiation message to the MRFC.

In step 2, the MRFC selects a currently idlest MRFP1 and forwards the media negotiation message sent by terminal 1 to MRFP1 for media negotiation.

The MRFC may forward the media negotiation message to MRFP1 according to a preset load balancing policy.

The load balancing policy is, for example, sending the received media negotiation message to each of the MRFPs in sequence, or sending the media negotiation message to a next MRFP when performance of an MRFP hits a bottleneck.

In step 3, MRFP1 returns a negotiation success message to the MRFC.

Specified contents may be carried in a response message to the media negotiation message to represent the negotiation success message. For example, the response message may carry 200 OK to represent the negotiation success message.

In step 4, the MRFC forwards the negotiation success message to terminal 1.

In step 5, after receiving the negotiation success message, terminal 1 sends a conference creation request message to the MRFC.

The conference creation request message is used to create a conference.

Terminal information and a unique code (ID) of the conference that the terminal requests to be created may be carried in the conference creation request message. For example, the conference creation request message may carry the ID of terminal 1, and the unique code of the conference namely confname1.

In step 6, after receiving the conference creation request message, the MRFC records conference data and forwards the conference creation request message to MRFP1 corresponding to terminal 1, and takes MRFP1 as a primary MRFP.

The conference data recorded by the MRFC may be kept in a memory of the MRFC, and the conference data can also be stored in a data center for queries of other MRFCs.

The MRFC, according to the terminal information in the conference creation request message from the terminal, may determine the MRFP that performs media negotiation with the terminal, and forward the conference creation request message to the MRFP that performs the media negotiation with the terminal.

In the present embodiment, the conference data may include, but is not limited to, terminal information, a conference ID, and information of an MRFP that succeeds in the negotiation with the terminal.

By querying the conference data, the MRFC may determine that the conference requested to be created by the conference creation request message has not been created in the MRFP connected to the MRFC, and therefore takes MRFP1 as a primary MRFP of the conference.

In step 7, MRFP1 performs an operation of creating and joining a conference of terminal 1 according to the conference creation request message, and notifies the MRFC after the conference is successfully created.

After the conference is successfully created, MRFP1 may return a response message, which carries 200 OK, indicating that the conference is successfully created.

In step 8, the MRFC notifies terminal 1 that the conference is successfully created.

In step 9, terminal 2 sends the media negotiation message to the MRFC.

In step 10, when performance of MRFP1 has reached a media processing threshold, the MRFC selects a currently idlest MRFP2, and sends the media negotiation message sent by terminal 2 to MRFP2 for media negotiation.

In step 11, MRFP2 returns a negotiation success message to the MRFC.

In step 12, the MRFC forwards the negotiation success message to terminal 2.

In step 13, after receiving the negotiation success message, terminal 2 sends a conference joining request message to the MRFC.

For example, the conference joining request message carries the ID of terminal 2 and the unique code of the conference namely confname1.

In step 14, the MRFC forwards the conference joining request message to MRFP2 corresponding to terminal 2.

In step 15, MRFP2 performs an operation of creating and joining a conference of terminal 2 according to the conference joining request message, and notifies the MRFC that the conference is successfully created after the conference is successfully created.

Because there is not a processing process of creating a conference encoded as confname1 in MRFP2, after the conference joining request message is received, a conference creation operation can be performed. Currently, if MRFP2 determines, according to the conference joining request message, that the conference has already existed in MRFP2, then terminal 2 can be enabled to directly join the conference.

In step 16, the MRFC notifies terminal 2 that the conference is successfully created.

In step 17, the MRFC sends a secondary conference cascading interface creation message to MRFP2 when detecting, according to the conference data, that the conference that terminal 2 requests to join is not on the primary MRFP1.

In step 18, MRFP2 creates a secondary conference cascading interface and returns information of the secondary conference cascading interface to the MRFC.

The information of the secondary conference cascading interface may include: an IP (Internet Protocol Address) and a port number of the secondary conference cascading interface.

In step 19, the MRFC saves the information of the secondary conference cascading interface of MRFP2 to the conference data, and sends the information of the secondary conference cascading interface of MRFP2 to MRFP1, and requests MRFP1 to create a primary conference cascading interface.

In step 20, MRFP1 saves the information of the secondary conference cascading interface of MRFP2, creates a primary conference cascading interface, and returns information of the primary conference cascading interface to the MRFC.

The information of the primary conference cascading interface may include: an IP and a port number of the primary conference cascading interface.

In step 21, the MRFC synchronously sends the information of the primary conference cascading interface of MRFP1 to MRFP2, and MRFP2 saves the information of the primary conference cascading interface.

In step 22, MRFP2 and MRFP1 complete cascading based on the information of the primary conference cascading interface and the information of the secondary conference cascading interface to form a media channel.

After MRFP1 acquires the information of the secondary conference cascading interface of MRFP2, and MRFP2 acquires the information of the primary conference cascading interface of MRFP1, the primary MRFP and the secondary MRFP can be cascaded; a media code stream of terminal 2 connected to MRFP2 can be transmitted from the secondary conference cascading interface of MRFP2 to the primary conference cascading interface of MRFP1, and a media code stream of terminal 1 connected to MRFP1 can be transmitted from the primary conference cascading interface of MRFP1 to the secondary conference cascading interface of MRFP2.

In the present embodiment, for a same conference, when there are multiple secondary MRFPs, the multiple secondary MRFPs may be respectively cascaded with the primary MRFP; media code streams of the multiple MRFPs may be transmitted all to the primary MRFP; the primary MRFP then synthesize the media code streams of the multiple MRFPs and the primary MRFP, i.e., synthesize a plurality of media code streams into one media code stream; and the synthesized media code stream is transmitted to the multiple secondary MRFPs respectively.

In the present embodiment, for a same conference, the conference created in the primary MRFP may be a primary conference, and the conference created in the secondary MRFP may be a secondary conference. When there are multiple terminals join the secondary conference, the secondary MRFP may, according to a video image synthesis message issued by the MRFC, determine whether the media code streams corresponding to the secondary conference need to be coded and decoded or synthesized. When the media code streams corresponding to the secondary conference need not to be coded and decoded or synthesized, the media code streams can be directly discarded (i.e., the media code streams generated by the multiple terminals joining the conference are all discarded). When the media code streams corresponding to the secondary conference need to be coded and decoded or synthesized, according to terminal information in the video image synthesis message, the media code streams corresponding to the terminal information can be synthesized by using a preset synthesis method and transmitted through the secondary conference cascading interface to the primary MRFP. The primary MRFP can also transmit the media code stream to the secondary MRFP in a same manner. In this way, only one code stream can be transmitted between MRFP1 and MRFP2 during the conference, which greatly reduces the data transmission amount on the network.

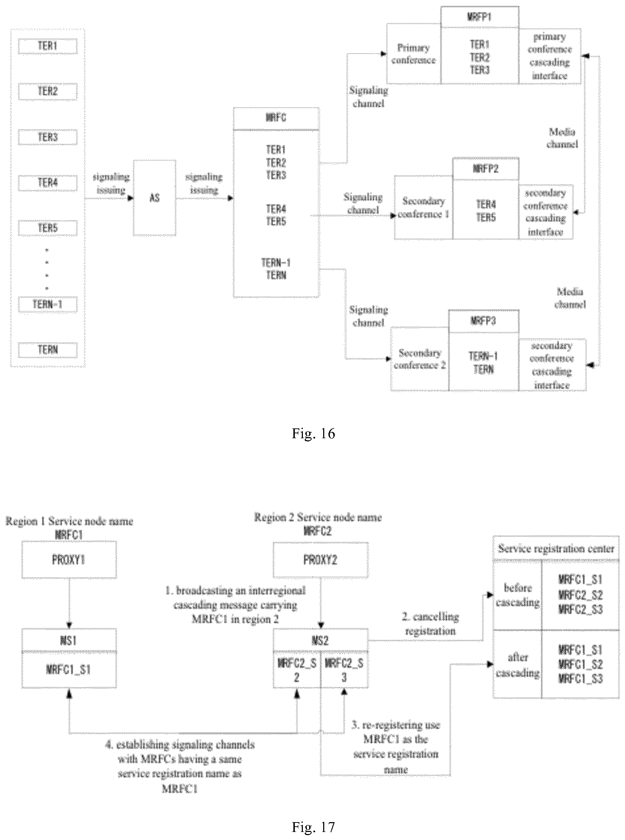

Fig. 16 is a schematic diagram of a cascaded conference model in a single-MRFC and multi-MRFP mode according to the ninth embodiment of the present disclosure.

In Fig. 16, TER1 to TER7 represent conference terminals 1 to N.

TER1, TER2, TER3 can be allocated to MRFP1 through media negotiation, and a primary conference is created in the primary MRFP1; TER4, TER5 can be allocated to MRFP2 through media negotiation, and a secondary conference is created in MRFP2; TER6 and TER7 can be allocated to MRFP3 through media negotiation, and a same secondary conference is created in MRFP3.

During the process of creating the secondary conferences by MRFP2 and MRFP3, MRFP2 and MRFP3 each may synchronously create a secondary conference cascading interface that is cascaded with the primary MRFP1, i.e., create a secondary conference cascading interface and synchronously send information of the secondary conference cascading interface to the primary MRFP1; the primary MRFP1 may create a primary conference cascading interface and synchronously send information of the primary conference cascading interface to MRFP2 and MRFP3.

After the primary conference cascading interface and the secondary conference cascading interfaces are successfully created, the media code streams between the primary and secondary conferences can be transmitted between MRFP1, MRFP2, and MRFP3 through the primary conference cascading interface and the secondary conference cascading interfaces.

### Embodiment 10

In the present embodiment, a multi-MRFC and multi-MRFP application scenario is described with reference to Fig. 3. The cascading between multiple MRFCs can be performed in advance or dynamically.

The cascading between multiple MRFPs may include: cascading of multiple MRFCs in different regions, and cascading of multiple MRFCs within a same region. Optionally, the cascading of multiple MRFCs in different regions can be realized by a service server. The cascading of multiple MRFCs in a same region can be realized by interactions between the MRFCs, i.e., one MRFC re-registers using a service registration name of another MRFC, and cascades with said another MRFC after the registration is completed.

The cascading of multiple MRFCs in two regions in advance is described below. Fig. 17 is a schematic diagram of interregional cascading of MRFCs according to the tenth embodiment of the present disclosure.

The following steps can be performed when interregional cascading of MRFCs is performed.

In step 1, when a software media server (Media Server, MS for short) MS2 in region 2 and a software media server MS1 in region 1 are cascaded with each other, PROXY2 in region 2 acquires a service registration name (MRFC1) of the MRFC in region 1, and carries the service registration name in an interregional cascading message and broadcasts the service registration name to the MRFC in region 2.

An operation and maintenance server can trigger the cascading of the software media servers in region 2 and region 1. PROXY2 can acquire the service registration name of the MRFC in region 1 from a service registration center (the service registration name of the MRFC in region 1 in Fig. 17 is MRFC1), and can also receive the service registration name of the MRFC in region 1 sent by the operation and maintenance server.

In the service registration center, before the cascading of MS1 and MS2, information of the three MRFCs can be MRFC1_S1, MRFC2_S2, and MRFC2_S3, and in the information of the MRFCs, MRFC1 and MRFC2 are service registration names.

In step 2, after receiving the interregional cascading message, the MRFC in region 2 cancels registration of a local MRFC (i.e., the MRFC in region 2) at the service registration center.

In step 3, the MRFC in region 2 use the service registration name carried in the interregional cascading message to re-register at the service registration center.

As shown in Fig. 17, the MRFCs corresponding to MRFC2_S2 and MRFC2_S3 cancel registration at the service registration center and re-register using the service registration name MRFC1. After the cascading, in the service registration center, information of the three MRFCs is MRFC1_S1, MRFC1_S2, and MRFC1_S3.

In step 4, after the MRFC in region 2 successfully re-registers, the MRFC in region 2 can use the new service registration name (MRFC1) to query the service registration center for other MRFCs having a same service registration name, and establishes signaling channels with said other MRFCs.

The MRFC corresponding to MRFC1_S2 can find MRFC1_S1 and MRFC1_S3, and establishes signaling channels with MRFCs corresponding to MRFC1_S1 and MRFC1_S3; the MRFC corresponding to MRFC1_S3 can find MRFC1_S1 and MRFC1_S2, and establishes signaling channels with MRFCs corresponding to MRFC1_S1 and MRFC1_S2. One signaling channel is established between the MRFCs corresponding to MRFC1_S2 and MRFC1_S3.

In the present embodiment, signaling channels can be established between region 2 and region 1 by way of cascading software media servers. A conference terminal in region 2 can be connected nearby to the software media server in region 2, and a conference terminal in region 1 can be connected nearby to the software media server in region 1. With the signaling channels between region 2 and region 1, the conference terminal in region 2 and the conference terminal in region 1 can join a same conference.

In the present embodiment, when a single software media server is insufficiently or not capable of processing, it can automatically perceive the currently insufficient capability of the media server and can enable conference terminals to be properly connected by distributing them to other software media servers.

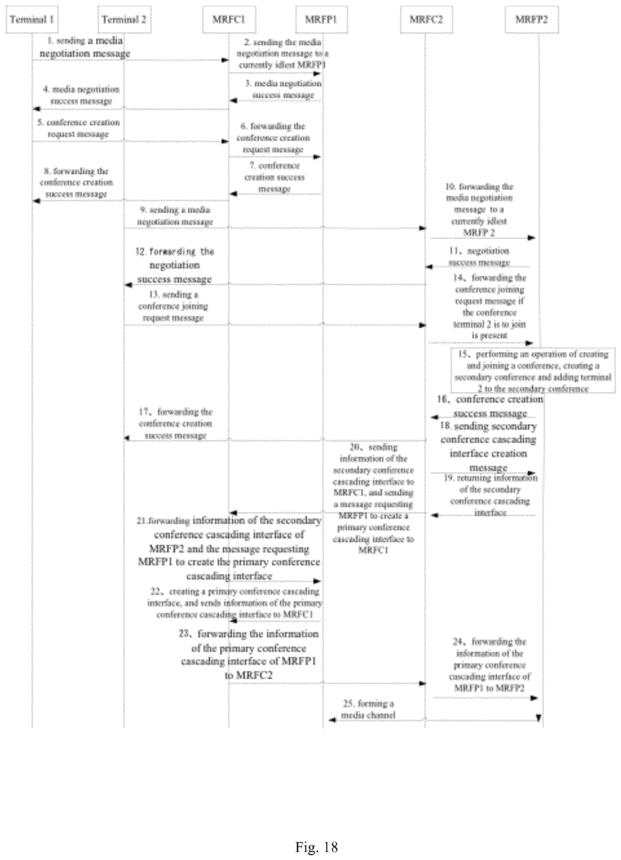

As shown in Fig. 18, it is a timing diagram of a conference cascading method based on a software media server according to the tenth embodiment of the present disclosure.

In the present embodiment, MRFC1 and MRFC2 are cascaded in advance. Interaction between terminal 1 and MRFC 1, and interaction between terminal 2 and MRFC 2 are all performed through a PROXY. In order to make it easier to understand the present embodiment, the PROXY is temporarily ignored in the description of the timing diagram and the subsequent description.

Referring to Fig. 18, the conference cascading method based on a software media server may include the following steps.

In step 1, MRFC 1 receives a media negotiation message from terminal 1.

Terminal 1 can send the media negotiation message to the PROXY, and the PROXY can distribute, according to a preset load balancing policy, the media negotiation message sent by terminal 1 to MRFC1.

In step 2, after receiving the media negotiation message, MRFC1 sends the media negotiation message to a currently idlest MRFP1 under MRFC1.

In step 3, MRFP1 performs a video and audio capability negotiation according to the media negotiation message, and returns a media negotiation success message to MRFC1 after the negotiation succeeds.

In step 4, MRFC1 forwards the received media negotiation success message to terminal 1.

In step 5, terminal 1 sends a conference creation request message to MRFC1.

In step 6, MRFC1 saves conference data to a data center, and sends the conference creation request message send by terminal 1 to MRFP1 corresponding to terminal 1, and takes MRFP1 as a primary MRFP.

The conference data may include, but is not limited to, terminal information, a conference ID, information of an MRFP having had a successful negotiation with the terminal, and an MRFC connected to said MRFP.

The data center can record data of conferences in a region, and can also record data of conferences in multiple regions as required.

MRFC1 can, by querying the data center, determine that the conference requested to be created by the conference creation request message sent by terminal 1 has not been created, and therefore takes MRFP1 as the primary MRFP of the conference.

After the media negotiation succeeds, the terminal can issue a conference creation and conference joining message to the PROXY.

In step 7, MRFP1 performs an operation of creating and joining a conference of terminal 1 according to the conference creation request message, and notifies MRFC1 that the conference is successfully created after the conference is successfully created.

In step 8, MRFC1 notifies terminal 1 that the conference is successfully created (for example, sending a conference creation success message to terminal 1).

In step 9, MRFC 2 receives a media negotiation message from terminal 2.

Terminal 2 can send the media negotiation message to the PROXY, and the PROXY can distribute the media negotiation message to MRFC2 according to a load balancing policy.

In step 10, MRFC 2 sends the media negotiation message sent by terminal 2 to a currently idlest MRFP 2 under MRFC 2.

In step 11, MRFP2 performs a video and audio capability negotiation according to the media negotiation message, and returns a negotiation success message to MRFC2 after the negotiation succeeds.

In step 12, MRFC2 forwards the received negotiation success message to terminal 2.

In step 13, terminal 2 sends a conference joining request message to MRFC2.

In step 14, MRFC2 determines, by querying the data center, whether the conference terminal 2 is to join is present or not. If the conference is not present, it indicates that the conference does not exist, and MRFC2 directly returns a conference joining failure message to terminal 2; and if the conference is present, MRFC2 sends the conference joining request message sent by terminal 2 to MRFP2 corresponding terminal 2.

In step 15, for a same conference, terminal 1 has created the conference in MRFP1, and therefore, MRFP2 performs an operation of creating and joining a conference of terminal 2 according to the conference joining request message, creates a secondary conference and adds terminal 2 to the secondary conference.

In step 16, after successfully creating the conference, MRFP2 notifies MRFC2 that the conference is successfully created.

In step 17, MRFC2 notifies terminal 2 that the conference is successfully created (for example, sending a conference creation success message to terminal 2), and takes MRFP2 as a secondary MRFP.

In step 18, MRFC2 sends a secondary conference cascading interface creation request to MRFP2.

In step 19, MRFP2 creates a secondary conference cascading interface and returns information of the secondary conference cascading interface to MRFC2.

In step 20, MRFC2 saves the received information of the secondary conference cascading interface, sends the information of the secondary conference cascading interface to MRFC1, and sends a message requesting MRFP1 to create a primary conference cascading interface to MRFC1.

In step 21, MRFC1 sends information of the secondary conference cascading interface of MRFP2 and the message requesting MRFP1 to create the primary conference cascading interface to MRFP1 where the primary conference is located.

In the step 22, MRFP1 saves the information of the secondary conference cascading interface of MRFP2, creates a primary conference cascading interface, and sends information of the primary conference cascading interface to MRFC1.

In step 23, MRFC1 forwards the information of the primary conference cascading interface of MRFP1 to MRFC2.

In step 24, MRFC2 forwards the information of the primary conference cascading interface of MRFP1 to MRFP2, so that MRFP2 saves the information of the primary conference cascading interface of MRFP1.

In step 25, MRFP1 and MRFP2 are cascaded with each other to form a media channel according to the information of the primary conference cascading interface and the information of the secondary conference cascading interface.

After MRFP1 learns the information of the secondary conference cascading interface of MRFP2 and after MRFP2 learns the information of the primary conference cascading interface of MRFP1, media code streams can then be transmitted across the MRFC and the MRFP based on the primary conference cascading interface and the secondary conference cascading interface. For example, when a media code stream generated by terminal 1 reaches MRFP1, the media code stream is processed by MRFP1, and then transmitted to MRFP2; and when a media code stream generated by terminal 2 reaches MRFP2, the media code stream is processed by MRFP2, and then transmitted to MRFP1.

The present embodiment can provide an interregional cascading function and support the principle of nearby connection. That is, when a user in region A and a user in region B joins a same conference, the user in region A is automatically connected to the software media server in region A and the user in region B is automatically connected to the software media server in region B, and then by cascading the software media servers in the two regions A and B, the user in region A and the user in region B are connected to a same conference. By this way, network bandwidth transmission amount between region A and region B can be reduced.

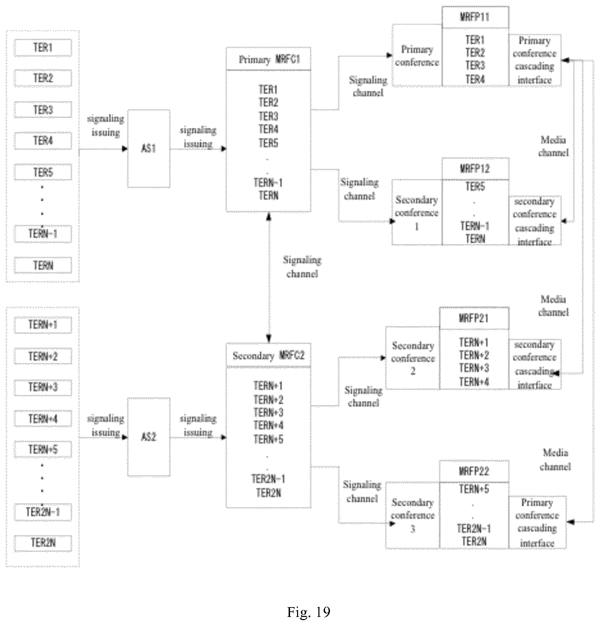

As shown in Fig. 19, it is a schematic diagram of a cascaded conference model in a multi-MRFC and multi-MRFP mode according to the tenth embodiment of the present disclosure. The following is a description of the cascaded conference model.

After terminals TER1, TER2, TER3, and TER4 are allocated through negotiation to the primary MRFC1, terminals TER1, TER2, TER3, and TER4 successfully create a primary conference on MRFP11 and join the primary conference. TER5, ..., TERN-1, and TERN are also allocated through negotiation to the primary MRFC1, and then create a secondary conference on MRFP12 and join the secondary conference. After the secondary conference is successfully created on MRFP12, and a first terminal successfully joins the secondary conference, a secondary conference cascading interface can be created and information thereof is sent synchronously to MRFP11, and a primary conference cascading interface corresponding to MRFP12 is created by MRFP11 and information thereof is sent synchronously to MRFP12, in which way, a media code stream between MRFP11 and MRFP12 is transmitted through the primary and secondary cascade interfaces.

After terminals TERN+1, TERN+2, TERN+3, and TERN+4 are allocated through negotiation to the secondary MRFC2, terminals TERN+1, TERN+2, TERN+3, and TERN+4 create a secondary conference on MRFP21 and join said secondary conference. After a first terminal successfully creates the secondary conference and joins the secondary conference, a secondary conference cascading interface can be created accordingly and information thereof is returned to the secondary MRFC2 and then forwarded by the secondary MRFC2 to the primary MRFC1 through the signaling channel; the primary MRFC1 then sends the information of the secondary conference cascading interface to the primary MRFP11; the primary MRFP 11 at the same time creates a primary conference cascading interface corresponding to MRFP 21, and returns information of the primary conference cascading interface to the secondary MRFP 21 through the original transmission channel. A media channel is thus created between the primary MRFP 11 and the secondary MRFP 21.

Terminals TERN+5 to TER2N, in a similar manner, create a secondary conference on MRFP 22, join the secondary conference and create a secondary conference cascading interface, and synchronously send information of the secondary conference cascading interface to the primary MRFP 11, thus creating a media channel between MRFP 22 and MRFP 11.

After terminals TER1 to TER2N successfully create the conference and join the conference, the media code stream of the secondary MRFP can be transmitted to the primary conference cascading interface of the primary MRFP, and the media code stream of the primary MRFP can be transmitted to the secondary conference cascading interface of the secondary MRFP.

### Embodiment 11

The present embodiment provides an MRFC (Multimedia Resource Function Controller). In the present embodiment, the MRFC includes a processor and a memory. The processor is configured to execute a software media server-based conference cascading program stored in the memory, so as to implement a software media server-based conference cascading method executed on an MRFC side as described above.

### Embodiment 12

The present embodiment provides a storage medium. The storage medium stores one or more programs. The one or more programs may be executed by one or more processors, to implement a software media server-based conference cascading method executed on an MRFC side as described above.

In the present embodiment, the computer readable storage medium includes: a ROM/RAM, a magnetic disk, and an optical disk.

### Embodiment 13

The present embodiment provides an MRFP (Multimedia Resource Function Processor). The MRFP includes a processor and a memory. The processor is configured to execute a software media server-based conference cascading program stored in the memory, so as to implement a software media server-based conference cascading method executed on an MRFP side as described above.

### Embodiment 14

The present embodiment provides a storage medium. The storage medium stores one or more programs. The one or more programs may be executed by one or more processors to implement a software media server-based conference cascading method executed on an MRFP side as described above.

An embodiment of the present disclosure also provides a computer readable storage medium storing thereon computer-executable instructions. The computer-executable instructions, when executed, implement the above-described software media server-based conference cascading method.

The present disclosure can help to realize cloud deployment of software media servers and conference cascading in the NGN (Next Generation Network)/IMS (IP Multimedia Subsystem) telecommunication field and the cloud computing field.

Those of ordinary skill in the art shall appreciate that all or some of the steps of the methods disclosed above, and the functional modules/units of the systems and devices disclosed above, may be implemented as software, firmware, hardware, and any suitable combinations thereof. In hardware implementations, the division between functional modules/units referred to in the above description does not necessarily correspond to the division between physical components. For example, one physical component may have multiple functions, or one function or step may be executed by a combination of a plurality of physical components. Some or all of the components may be implemented as software executed by a processor, such as a digital signal processor or a microprocessor, or be implemented as hardware, or as an integrated circuit, such as an application-specific integrated circuit. Such software may be distributed on a computer-readable medium which may include computer storage medium (or non-transitory medium) and communication medium (or transitory medium). As known by those of ordinary skill in the art, the term computer storage medium includes volatile and nonvolatile, removable and non-removable medium implemented in any method or technology for storage of information (such as computer-readable instructions, data structures, program modules, or other data). Computer storage medium includes, but is not limited to, random access memory (RAM), read only memory (ROM), electrically erasable programmable read-only memory (EEPROM), flash memory or other memory technologies, compact disc read-only memory (CD-ROM), digital versatile disk (DVD) or other optical disk storages, magnetic cassettes, magnetic tapes, magnetic disk storages or other magnetic storages, or any other medium that can be used to store desired information and can be accessed by a computer. In addition, it is known to those of ordinary skill in the art that, communication medium typically contains computer-readable instructions, data structures, program modules or other data in a modulated data signal such as a carrier wave or other transport mechanism, and may include any information delivery medium.

Those of ordinary skill in the art shall appreciate that modifications or equivalent substitutions may be made to the technical solutions of the present application without departing from the spirit and scope of the present application, and all such modifications and substitutions are intended to be included within the scope of the claims of the present application.

### Industrial Applicability

The present disclosure, when a software media server is insufficiently or not capable of processing, can dynamically cascade devices in the software media server or cascade the software media server with other software media servers, which can effectively improve the processing capability of the software media server, and enable a multimedia conferencing system to be more stable and a multimedia conference to be proceeded more reliably without any additional human operations.

## Claims

1. A conference cascading method based on a software media server, wherein the method is executed on a multimedia resource function controller MRFC side, and the method comprises steps of:
receiving a conference request message sent by a conference terminal;
forwarding the conference request message to a multimedia resource function processor MRFP, so as to control the MRFP to perform an operation of creating and joining a conference according to the conference request message; and
controlling, after the operation of creating and joining the conference and when it is detected that the conference is created on multiple MRFPs, the multiple MRFPs to cascade with each other so as to form a media channel.

2. The method according to claim 1, wherein the step of controlling, when it is detected that the conference is created on multiple MRFPs, the multiple MRFPs to cascade with each other, comprises:
detecting, after controlling a first MRFP to create the conference, whether the conference created on the first MRFP has been created on a second MRFP connected to a local MRFC;
controlling the second MRFP to create a primary conference cascading interface and controlling the first MRFP to create a secondary conference cascading interface, when the conference has been created on the second MRFP; and
sending information of the primary conference cascading interface to the first MRFP, and sending information of the secondary conference cascading interface to the second MRFP, so that the first MRFP and the second MRFP are cascaded with each other.

3. The method according to claim 1, wherein before the step of receiving a conference request message sent by a conference terminal, the method further comprises:
receiving an interregional cascading message carrying a service registration name broadcast by a service server;
cancelling registration of a local MRFC at a service registration center, and using the service registration name to re-register at the service registration center; and
querying, after the registration succeeds, the service registration center for other MRFCs having a same service registration name as the local MRFC, and establishing signaling channels between the local MRFC and said other MRFCs.

4. The method according to claim 1, wherein before the step of controlling the multiple MRFPs to cascade with each other, the method further comprises:
detecting, after controlling a first MRFP connected to a local MRFC to create the conference, whether the conference created on the first MRFP has already been created on a second MRFP connected to other MRFCs;
using a service registration name of said other MRFCs to re-register at a service registration center when the conference has already been created on the second MRFP connected to said other MRFCs; and
establishing signaling channels between the local MRFC and said other MRFCs after the registration succeeds.

5. The method according to claim 3 or 4, wherein the step of controlling, when it is detected that the conference is created on multiple MRFPs, the multiple MRFPs to cascade with each other, comprises:
controlling a first MRFP connected to a local MRFC to create a secondary conference cascading interface and requesting a second MRFP connected to said other MRFCs to create a primary conference cascading interface, after signaling channels are established between the local MRFC and said other MRFCs; and
sending information of the secondary conference cascading interface to the second MRFP connected to said other MRFCs, and forwarding information of the primary conference cascading interface sent by the second MRFP to the first MRFP, so that the first MRFP and the second MRFP are cascaded with each other.

6. The method according to claim 1, wherein after the step of controlling the multiple MRFPs to cascade with each other, the method further comprises:
sending a video image synthesis message to all or some of the multiple MRFPs, wherein the video image synthesis message includes information of conference terminals corresponding to respective ones of multiple video images to be synthesized.

7. A conference cascading method based on a software media server, wherein the method is executed on a multimedia resource function processor MRFP side, and the method comprises steps of:
receiving a conference request message forwarded by a multimedia resource function controller MRFC from a conference terminal;
performing an operation of creating and joining a conference according to the conference request message; and
cascading, under control of the MRFC, with other MRFPs that have created the conference to form a media channel, after the operation of creating and joining the conference and when the MRFC detects that the conference is created on multiple MRFPs.

8. The method according to claim 7, wherein the step of cascading, under control of the MRFC, with other MRFPs that have created the conference, comprises:
creating a secondary conference cascading interface under the control of the MRFC;
sending information of the secondary conference cascading interface to the MRFC; and
receiving information of a primary conference cascading interface forwarded by the MRFC from said other MRFPs, and completing the cascading with said other MRFPs.

9. The method according to claim 7, wherein after the step of cascading with other MRFPs that have created the conference, the method further comprises:
receiving a video image synthesis message sent by the MRFC, wherein the video image synthesis message includes information of conference terminals corresponding to respective ones of multiple video images to be synthesized; and
synthesizing media code streams generated respectively by the conference terminals into one media code stream according to the information of the conference terminals corresponding to the respective ones of the multiple video images to be synthesized, and transmitting the synthesized media code stream between the cascaded MRFPs through the media channel.

10. A multimedia resource function controller MRFC, comprising a processor and a memory, wherein the processor is configured to execute a software media server-based conference cascading program stored in the memory, so as to implement the conference cascading method based on a software media server according to any one of claims 1 to 6.

11. A storage medium storing thereon one or more programs, wherein the one or more programs are executable by one or more processors, so as to implement the conference cascading method based on a software media server according to any one of claims 1 to 6.

12. A multimedia resource function processor MRFP, comprising a processor and a memory, wherein the processor is configured to execute a software media server-based conference cascading program stored in the memory, so as to implement the conference cascading method based on a software media server according to any one of claims 7 to 9.

13. A storage medium storing thereon one or more programs, wherein the one or more programs are executable by one or more processors, so as to implement the conference cascading method based on a software media server according to any one of claims 7 to 9.
